# FASCICULE DE BREVET EUROPEEN

(11) **EP 3 331 780 B1**
(45) Date de publication et mention de la délivrance du brevet: **07.08.2019**
(21) Numéro de dépôt: 16750889.4
(22) Date de dépôt: 27.06.2016
(51) Int. Cl.: B65G 1/137, B65G 1/10, B07C 3/08

(54) **PROCEDE DE TRAITEMENT DE COLIS AVEC DES NAVETTES, DES ETAGERES GIGOGNES ET DES CHARIOTS ELEVATEURS A PLATEAUX**
PAKETHANDHABUNGSVERFAHREN MIT ZUBRINGERN, AUSZIEHBAREN REGALEN UND PLATTFORMHUBWAGEN
PARCEL HANDLING METHOD USING SHUTTLES, PULL-OUT RACKING AND PLATFORM ELEVATOR TRUCKS

(30) Priorité: 05.08.2015 FR 1557559
(43) Date de publication de la demande: 13.06.2018
(73) Titulaire: Solystic, 92220 Bagneux (FR)
(72) Inventeur: CHIROL, Luc, 75016 Paris (FR); MIETTE, Emmanuel, 95210 Saint Gratien (FR)
(74) Mandataire: Prugneau, Philippe
(86) Numéro de dépôt international: PCT/FR2016/051576
(87) Numéro de publication internationale: WO 2017/021596

(56) Documents cités:
- WO-A1-2013/102212
- WO-A1-2013/135227
- WO-A1-2015/052830
- FR-A1- 2 996 788
- JP-A- H0 867 498
- US-A1- 2004 093 650
- US-A1- 2015 073 589
- US-B1- 8 972 045
- US-B1- 9 073 736

## Description

### Domaine technique

L'invention concerne le traitement d'objets dans un centre logistique, et en particulier le traitement des colis dans un centre logistique de tri de colis comprenant une zone de dépose des colis arrivant dans le centre et une zone de rangement des colis où les colis arrivant dans le centre sont stockés de manière ordonnée les uns par rapport aux autres en vue de ressortir du centre en ordre suivant une certaine séquence par exemple pour leur distribution par un facteur.

Un tel procédé est déjà connu du brevet FR-2996788. Ce brevet décrit un procédé de traitement d'objets dans un centre logistique selon le préambule de la revendication 1 ainsi qu'un centre logistique de traitement de colis selon le préambule de la revendication 5.

Dans ce procédé connu, les colis sont déplacés de la zone de dépose vers la zone de rangement avec des étagères sur pied du type gigogne attelées à des robots-navette, ces étagères gigognes ayant des formats (hauteurs et largeurs) différents pour être aptes à s'encastrer en se superposant.

Plusieurs étagères gigognes chargées chacune d'un colis peuvent donc être superposées sur un segment de la zone de rangement ce qui fait qu'on exploite en hauteur une zone de rangement à faible emprise au sol.

Le but de l'invention est de densifier encore plus le stockage en hauteur des colis dans la zone de rangement pour trier encore plus de colis dans un centre logistique de tri de colis.

A cet effet, l'invention a pour objet un procédé de traitement d'objets dans un centre logistique comprenant une zone de dépose des objets arrivant dans le centre et une zone de rangement des objets où les objets arrivant dans le centre sont stockés de manière ordonnée les uns par rapport aux autres en vue de ressortir du centre en ordre suivant une certaine séquence, procédé dans lequel on déplace les objets de la zone de dépose vers la zone de rangement avec des étagères gigognes attelées à des robots-navette, caractérisé en ce qu'on utilise aussi des plateaux posés sur des chariots élévateurs attelés aux robots-navette pour déplacer les objets de la zone de dépose vers la zone de rangement, et au moins un rack vertical à plateaux pour stocker en superposition les plateaux chargés en objets dans la zone de rangement, en ce que si un objet est chargé sur une étagère gigogne dans la zone de dépose, le robot-navette stocke l'objet avec l'étagère gigogne dans une partie basse du rack à plateaux et si un objet est chargé sur un plateau posé sur un chariot élévateur, le robot-navette stocke l'objet avec le plateau au dessus de l'étagère gigogne dans une partie haute du rack à plateaux qui est munie de glissières horizontales.

Le procédé selon l'invention peut présenter les particularités suivantes :
- les chariots élévateurs sont actionnés par les robots-navette de telle manière à positionner dynamiquement en hauteur les plateaux dans le rack à plateaux pour minimiser l'espace libre entre deux plateaux consécutifs;
- on utilise plusieurs racks à plateaux disposés en une ou plusieurs rangées dans la zone de rangement.

L'invention s'étend à un centre logistique de traitement de colis comprenant au moins un point de dépose/chargement desdits colis et une zone de rangement destinée à recevoir des colis en attente de chargement et divisée en différents segments correspondants chacun à une expédition desdits colis, et dans lequel des étagères sur pied de type gigogne de formats (hauteurs et largeurs) différents, aptes à s'encastrer en se superposant, et des navettes motorisées autonomes aptes à accoster chaque étagère sous la commande d'une unité centrale de contrôle/commande, caractérisé en ce qu'il comprend en outre des chariots élévateurs portes plateaux aptes à être accostés par les navettes et un ou plusieurs racks à plateaux dans lesquels sont stockés en partie basse des étagères gigogne chargées en colis et en partie haute, au-dessus des étagères gigognes, des plateaux chargés en colis.

En particulier, le ou les racks à plateaux sont roulants et le ou les racks à plateaux roulants sont agencés pour être accostés et déplacés par une navette. Bien entendu, l'invention peut s'étendre à d'autres objets que des colis, comme des bagages ou analogues.

### Présentation sommaire des dessins

La figure 1 illustre de façon très schématique un centre logistique de tri de colis avec des robots-navette, des étagères gigognes et des chariots élévateurs pour transférer des colis d'un point de dépose vers une zone de rangement.
La figure 2 illustre très schématiquement le centre logistique avec les robots-navette, les étagères gigognes et les chariots élévateurs pour transférer les colis de la zone de rangement vers le point de chargement.
Les figures 3 et 4 sont des organigrammes illustrant les étapes du procédé de traitement de colis selon l'invention.
Les figures 5 à 8 illustrent l'utilisation d'un robot-navette avec une étagère du type gigogne.
Les figures 9 et 10 illustrent la zone de rangement avec des étagères gigognes en partie basse de racks à plateaux.
La figure 11 illustre un chariot-élévateur selon l'invention.

### Description des modes de réalisation

De manière générale, l'invention porte sur un procédé de traitement d'objets qui sont plus particulièrement ici des colis postaux à trier dans un centre logistique de tri postal pour colis.

Sans sortir du cadre de l'invention, les objets pourraient être des bagages et le centre logistique un lieu destiné à l'organisation du chargement des bagages dans un avion par exemple.

Les objets pourraient également être issus de la préparation de commandes en sortie d'un entrepôt logistique et le centre être un lieu destiné à l'expédition de ces commandes.

La description qui suit est centrée de manière non limitative sur le traitement de colis postaux dans un centre logistique de tri postal 1.

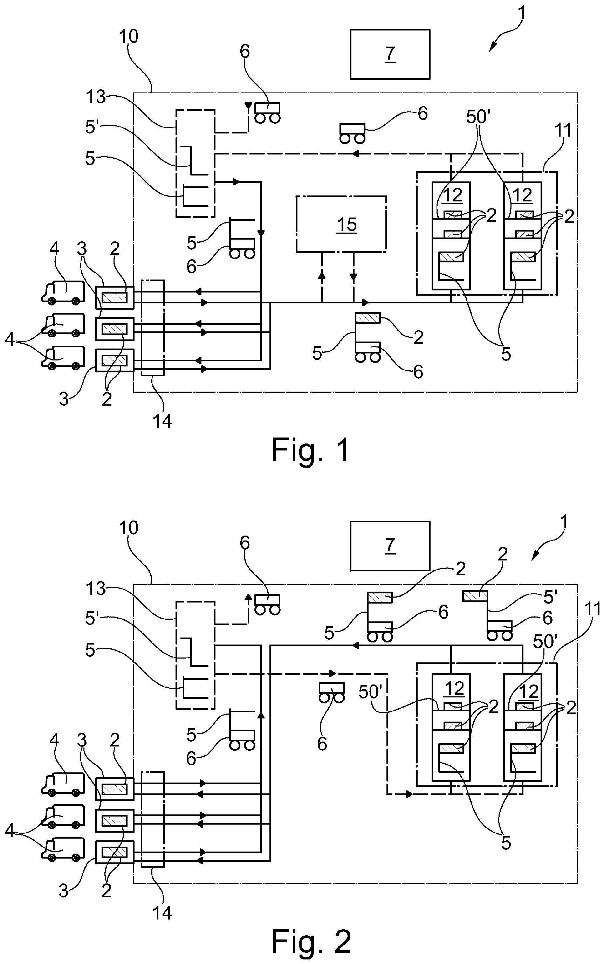

Le centre 1 illustré par les figures 1 et 2, comporte une plateforme 10 pourvue de points 3 de dépose et de chargement des colis 2 accessibles par des moyens de transport, tels que par exemple des camions 4 destinés à amener et à remporter les colis 2.

Dans l'exemple illustré, les points 3 de dépose, sont au nombre de trois, disposés côte à côte, chacun combiné à un point 3 de chargement.

Les points 3 de dépose peuvent bien entendu être dissociés des points 3 de chargement, et/ou être prévus en plus grand nombre, et/ou être disposés selon une autre configuration que celle illustrée.

La plateforme 10 comprend notamment une zone de rangement 11 destinée à recevoir des colis 2 déchargés et en attente de chargement.

Cette zone de rangement 11 est divisée en plusieurs segments 12, en deux segments 12 dans l'exemple illustré sur les figures 1 et 2.

Selon l'invention, on utilise des étagères du type gigogne 5, des chariots élévateurs à plateaux 5' et des robots-navettes 6 pour déplacer les colis du point de dépose 3 vers la zone de rangement 11.

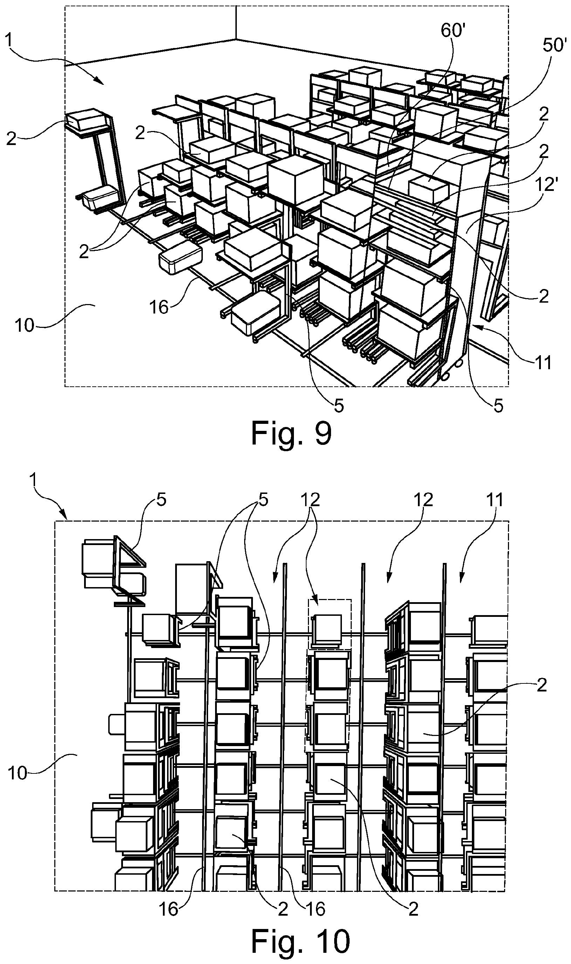

En plus, les plateaux 50' prévus pour les chariots élévateurs 5' sont stockés dans un ou plusieurs racks à plateaux tel que celui montré sur la figure 9.

Le centre 1 selon l'invention comporte encore une zone parking 13 dans laquelle sont stockées des étagères 5 vides. La zone 13 sert aussi à stocker des chariots élévateurs 5' et des plateaux 50' pour ces chariots élévateurs.

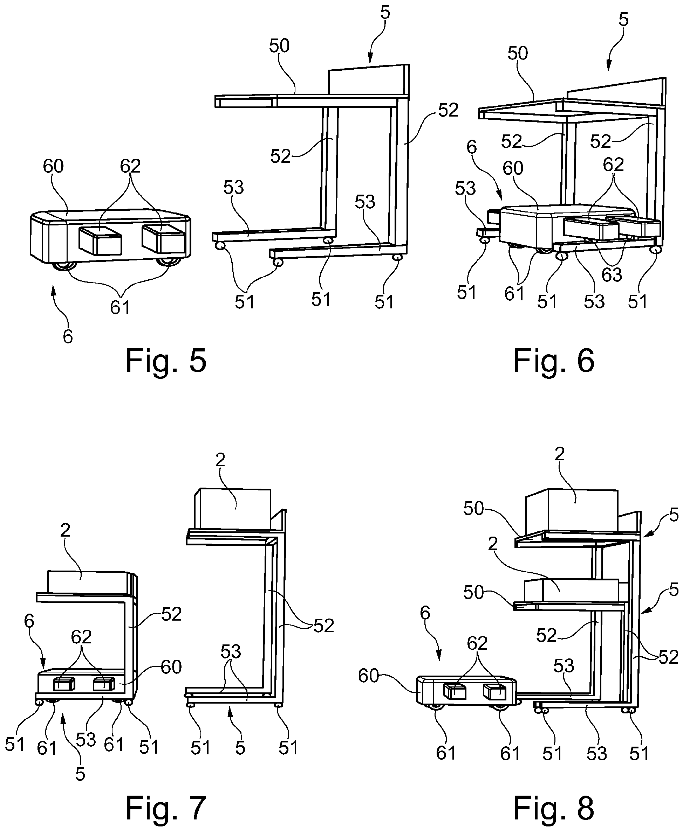

Les étagères 5 sont détaillées sur les figures 5 à 8. Elles sont sur pied et de type gigogne. Chaque étagère 5 comporte un plateau 50 adapté en dimensions pour porter un colis 2 unique. Le plateau 50 est solidaire d'un cadre porté par des roues 51. Ce cadre comporte deux montants verticaux 52 solidaires en leurs extrémités basses de deux montants horizontaux 53, parallèles entre eux et pourvus de roues 51.

Les étagères 5 présentent entre elles des hauteurs et des largeurs différentes. Dans l'exemple illustré, les étagères 5 présentent ainsi trois formats (couple hauteur-largeur) différents : petit format, format moyen, grand format.

De plus, sous le plateau 50, le cadre ne comporte aucune traverse reliant entre eux les montants verticaux 52 ou les montants horizontaux 53. Ainsi, et comme illustré par les figures 7 et 8, une étagère 5 de petit format ou de format moyen peut passer sous une étagère 5 de format moyen ou de grand format sous laquelle elle peut être rangée.

Il est ainsi possible de ranger des étagères 5 de formats différents en un même emplacement. Dans l'exemple illustré trois étagères 5 ayant chacune l'un des trois formats différent des deux autres peuvent être rangées en un même emplacement, encastrées et superposées les unes aux autres.

Par ailleurs, les robots-navette (ou navette motorisée) décrits plus loin sont conçus pour être aptes à passer sous toutes les étagères 5, quel que soit le format de chaque étagère 5.

Lorsqu'elles ne sont pas stockées dans la zone parking 13, les étagères 5 peuvent être en attente dans la zone de rangement 11 ou être en circulation sur la plateforme 10.

Dans l'exemple illustré, les étagères 5 sont mobiles en elles-mêmes par le biais de leurs roues 51.

Les navettes 6 du centre sont par exemple stockées dans la zone parking 13 avec les étagères 5 ou dans toute autre zone parking ou de maintenance. Lorsqu'elles ne sont pas stockées, les navettes 6 sont en circulation sur la plateforme 10. La largeur de la navette 6 est inférieure à la distance séparant les montants horizontaux 53 de l'étagère 5 de petit format.

Ainsi, et comme illustré par les figures 6 et 7, la navette 6 peut passer entre les montants horizontaux 53 de chaque étagère 5, que celle-ci porte ou non un colis 2 et quel que soit son format.

Comme détaillé sur les figures 5 à 8, chaque navette 6 comporte un bloc moteur 60 porté par des roues motrices 61 commandées par une unité centrale 7 de contrôle/commande décrite plus loin.

Le bloc moteur 60 comporte également des bras 62 extensibles latéralement du bloc moteur 60 et dont le déploiement est commandé par l'unité centrale 7 de contrôle/commande.

Ces bras 62 sont pourvus de moyens de préhension 63 (en partie visibles sur la figure 6) aptes à s'accrocher aux montants horizontaux 53 des étagères 5.

Ces moyens de préhension 63 sont par exemple des moyens magnétiques qui coopèrent avec des montants horizontaux 53 métalliques des étagères 5.

Les bras 62 peuvent par ailleurs être déployés au-dessus des montants horizontaux 53, et sur une longueur suffisante pour atteindre les montants horizontaux 53 de l'étagère 5 de grand format. Ainsi, les bras 62 peuvent s'accommoder des différentes largeurs d'étagères 5 et accoster simultanément une étagère 5 unique ou plusieurs étagères 5 de formats différents. Chaque navette 6 est autonome et comprend des capteurs de positionnement, une alimentation et un calculateur lui permettant notamment d'optimiser ses déplacements et d'éviter les collisions avec les obstacles et autres navettes 6. Les navettes 6 sont individuellement commandées à distance par l'unité centrale 7 de contrôle/commande schématisée sur les figures 1 et 2 et dont le fonctionnement est décrit plus loin.

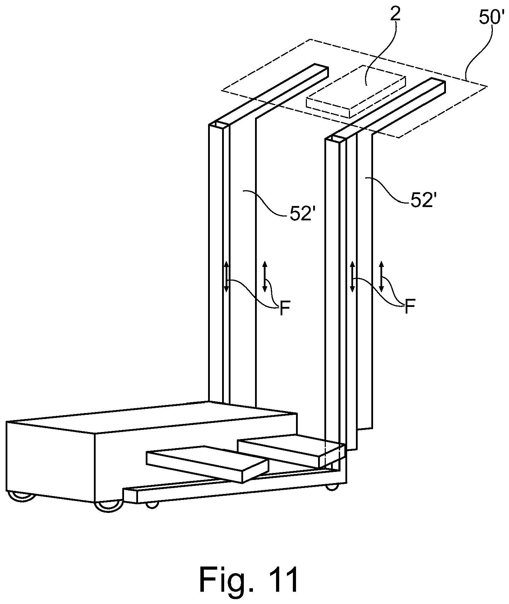

Le centre comporte aussi selon l'invention des chariots élévateurs 5' qui portent des plateaux 50'. La figure 11 illustre un tel chariot élévateur 5' qui comporte ici un cadre porté par des roues 51'. Ce cadre comporte deux montants verticaux 52' télescopiques vers le haut (illustré par les flèches F) solidaires en leurs extrémités basses de deux montants horizontaux 53', parallèles entre eux et pourvus des roues 51'.

Chaque montant télescopique 52' peut être par exemple constitué de plusieurs barres parallèles coulissantes l'une dans l'autre pour créer l'effet télescopique.

L'extrémité libre des montants verticaux 52' est agencée pour porter à plat un plateau 50' amovible. Cette extrémité libre peut par exemple être conçue comme une fourche horizontale qui passe sous le plateau 50'.

Le centre 1 peut être équipé de plusieurs chariots élévateurs 5' et d'une multitude de plateaux 50' de même dimension et interchangeables qui peuvent être stockés dans la zone parking 13. Comme visible sur la figure 11, les montants horizontaux 53' du cadre d'un chariot élévateur 5' sont écartés l'un de l'autre pour être accostés par une navette 6 de la même manière qu'une étagère gigogne 5. L'écartement entre les montants horizontaux peut être plus petit que l'écartement prévu entre deux montants horizontaux 53 de l'étagère gigogne la plus petite.

Le déploiement des montants verticaux 52' d'un chariot élévateur 5' peut être assuré par une transmission électrique ou hydraulique qui est commandée depuis la navette 6 accostant ce chariot élévateur.

Le centre 1 selon l'invention comporte en outre une zone d'identification 14 (visible sur la figure 1) au niveau de laquelle les colis 2 déchargés sont identifiés. L'identification peut être réalisée sans contact, par exemple par lecture d'un code barres sur le colis. Le code barre peut être un identifiant du colis qui est enregistré en mémoire d'une base de données en correspondance avec d'autres informations sur le colis, comme une adresse de livraison, des caractéristiques 3D (hauteur, largeur, longueur), un poids, etc...

Le format de l'étagère 5 portant le colis 2 peut également être détecté au niveau de cette zone d'identification 14, ou préalablement déterminé par tout moyen adapté. Les étagères 5 peuvent par ailleurs être identifiées de manière unique. Dans ce cas, l'identité de chaque étagère 5, en plus de son format, peut être détectée au niveau de cette zone d'identification 14.

Le centre 1 selon l'invention comporte une unité centrale 7 de contrôle/commande apte à superviser le fonctionnement du centre 1 et en particulier à commander à distance les déplacements des navettes 6. Cette unité 7 exploite la base de données concernant les caractéristiques des colis. L'unité centrale 7 est en outre apte à recevoir des informations relatives à l'identification des étagères 5 utilisées, la destination des colis 2 et le positionnement de chaque navette 6. La gestion des déplacements des navettes 6 par l'unité centrale 7 permet d'optimiser leur flux de circulation et d'éviter toute collision.

L'unité centrale 7 comporte un plan de tri des colis pour leur expédition qui répartit les colis dans la zone de rangement 11 à la fois sur les segments 12 et en hauteur avec les étagères gigogne et les racks à plateaux 12'.

A partir des informations de tri collectées dans la zone d'identification 14 sur la destination des colis 2 déposées, l'unité centrale 7 organise le rangement des étagères 5 dans les segments 12 de la zone de rangement 11 et aussi la superposition des plateaux au-dessus des étagères 5 dans le ou les racks à plateaux 12'.

Quand tous les colis 2 sont rangés et ordonnés dans la zone de rangement 11, l'unité centrale 7 organise leur récupération selon une séquence ordonnée de sorte à optimiser par exemple le chargement des camions 4 en vue de la distribution des colis selon cette séquence ordonnée.

Le centre 1 selon l'invention peut comporter une zone de service 15 au niveau de laquelle les colis 2 peuvent, de manière optionnelle, être pesés, étiquetés ou réparés. Comme détaillés plus loin, les colis 2 sont acheminés vers la zone de service 15, portés par une étagère 5 motorisée par une navette 6 ou encore un chariot élévateur 5' à plateau 50' motorisé par une navette 6. Un contrôle de sécurité des colis 2 peut également être réalisé au niveau de cette zone de service 15.

Le centre 1 selon l'invention permet de mettre en oeuvre le procédé de traitement de colis 2 décrit ci-après, en optimisant le rangement de la zone de rangement 11 ainsi que le chargement des colis 2 dans les camions 4 en vue de leur distribution.

Le procédé de traitement selon l'invention commence à l'arrivée d'un colis 2, par exemple amené par camion 4 et déposé en l'un des points 3 de dépose.

L'arrivée du camion 4 peut être détectée automatiquement par tout moyen connu, ou signalée par l'agent de manutention, par exemple au moyen d'un interrupteur (non représenté) prévu à cet effet au niveau du point 3 de dépose.

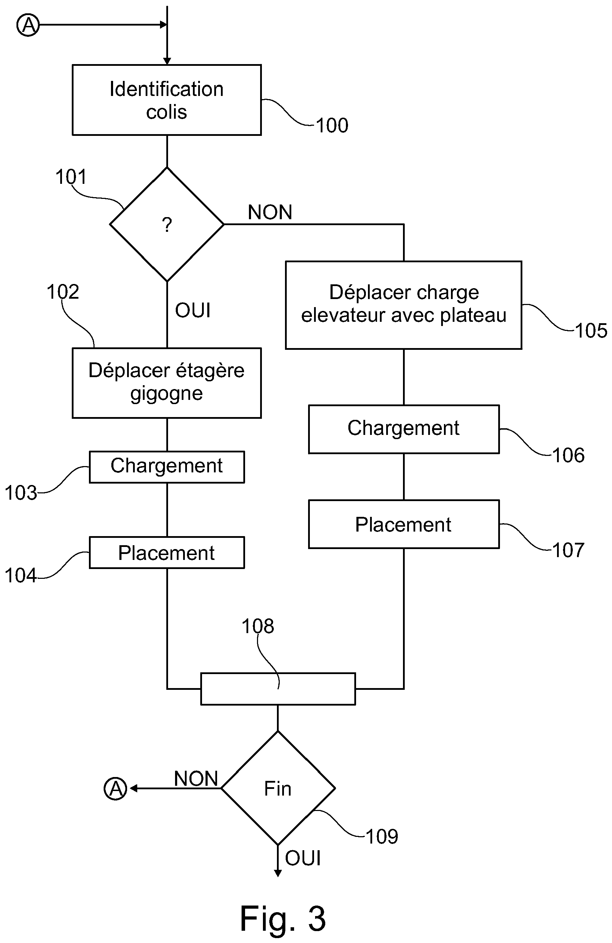

Comme indiqué par la figure 3, le processus démarre en 100. Le colis 2 est identifié et son code d'identification est transmis à l'unité centrale 7.

Suite à cette identification, l'unité 7 détecte en 101 si le colis 2 est un colis du type à poser sur une étagère gigogne ou un colis à poser sur un plateau d'un chariot élévateur. D'autres informations peuvent encore être récupérées comme les dimensions du colis (hauteur, largeur, longueur), le poids, l'adresse de livraison, etc...

Selon l'invention, les étagères gigognes sont réservées à des colis lourds ou alors très encombrants, par exemple ayant une hauteur supérieure à 20cm. Les autres colis, plus petits et moins lourds sont déplacés par chariot élévateur.

Selon l'invention, les petits colis posés sur des plateaux 50' déplacés par chariot élévateur sont stockés en partie haute d'un rack à plateaux 12' comme illustré sur la figure 9 tandis que les gros colis sur étagères gigognes sont stockés au sol et le cas échéant en partie basse d'un rack à plateaux.

Sur la figure 9, on a illustré un rack à plateaux 12' avec en partie haute une superposition de glissières 60' espacées entre elles avec un faible pas qui sont sans plateaux. On a aussi illustré ici trois plateaux 50' avec trois petits colis 2 qui sont superposés en partie haute du rack à plateaux 12'.

On comprendra qu'avec un chariot élévateur 5' on peut amener à une hauteur voulue un colis 2 posé sur un plateau 50' et insérer ce plateau dans les glissières 60' pour un stockage dans le rack à plateaux. L'insertion du plateau 50' dans le rack 12' peut se faire en avançant le chariot élévateur vers le rack 12' ou alors par un effet télescopique de la fourche du chariot élévateur. Le retrait d'un plateau 50' du rack 12 peut également être réalisé par un recul du chariot élévateur par rapport au rack ou encore par effet télescopique de la fourche du chariot élévateur.

Selon l'invention, un rack à plateaux 12' peut avoir une hauteur depuis le sol de plusieurs mètres et donc une grande capacité de stockage de plateaux 50'.

Comme illustré sur la figure 9, le rack présente deux flancs latéraux espacés entre eux d'une distance suffisante pour qu'une étagère gigogne de la plus grande dimension puisse être insérée au sol entre ces deux flancs. On a aussi illustré sur la figure 9 en partie basse du rack à plateaux 12', trois étagères gigognes encastrées avec des gros colis qui se superposent. Avec ce rack à plateaux et les étagères gigognes, on optimise l'encombrement au sol.

En 102, une étagère gigogne 5 est amenée par robot navette au point de dépose 3. En 103, un gros colis est chargé par l'Opérateur sur l'étagère gigogne et en 104 le robot navette déplace l'étagère gigogne avec le colis 2 jusqu'à la zone de rangement 13. Cette zone de rangement peut correspondre à la partie basse d'un rack à plateaux. L'emplacement du rangement (choix du segment dans la zone 13) est calculé par l'unité 7 à partir du plan de tri et des caractéristiques du colis. Ensuite en 108 le robot navette libère l'étagère gigogne et revient par exemple dans la zone parking 13.

Maintenant, en 105 un chariot élévateur 5' avec un plateau vide 50' est amené par robot navette au point de dépose. En 106, un petit colis est posé par l'Opérateur sur le plateau 50'. En 107, l'ensemble est amené par le robot navette jusqu'à la zone de rangement 13. A partir du plan de tri et des paramètres du colis et aussi d'un historique du stockage des colis dans les racks à plateaux, le robot navette 6 piloté par l'unité 7 actionne le chariot élévateur pour présenter dynamiquement le plateau 50' à une hauteur ajustée en vue de son insertion dans un rack 12' avec optimisation de l'espace en fonction du colis placé juste en dessous. En particulier, l'espace libre entre deux plateaux 50' dans un rack est réduit au minimum par l'unité 7. Ensuite en 108, le robot navette avec le chariot élévateur libère le plateau 50' dans le rack et revient dans la zone parking 13.

Le processus revient à l'étape 100 jusqu'à ce qu'il n'y ait plus de colis à ranger en 109.

Comme on peut le comprendre, l'unité 7 maintient en mémoire une répartition des colis dans la zone de rangement 11, que ce soit dans les segments 12 ou dans les racks à plateaux 12'.

Une fois tous les colis 2 triés dans la zone de rangement 11, les colis peuvent être repris de cette zone et chargés dans les camions en vue de leur expédition et distribution.

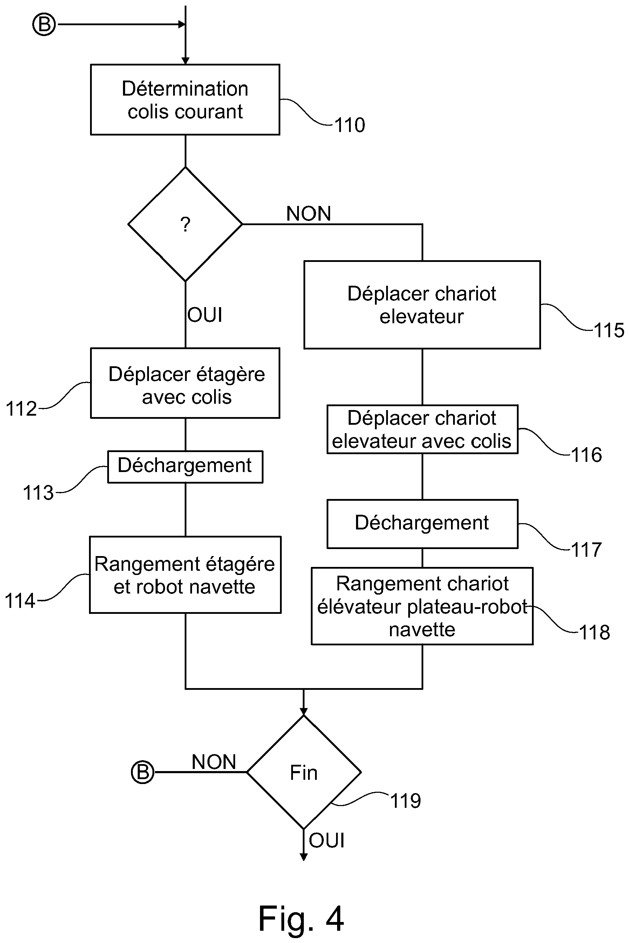

Ce chargement peut être réalisé dans la foulée du processus de la figure 3 ou après un temps d'attente. Pour ce faire, l'unité centrale 7 affecte un groupe de navettes 6 au chargement des colis de chaque destination dans un ou plusieurs camions 4 et organise et détermine à l'étape 110 sur la figure 4 une séquence de chargement de sorte que le chargement des camions 4 se fasse selon la séquence de distribution de chaque expédition.

En 111, un type de colis pour le colis courant est donc déterminé par l'unité 7 (gros colis sur étagère gigogne, petit colis sur plateaux).

En 112, il s'agit d'un gros colis. Une navette prend en charge l'étagère gigogne et l'amène au point de chargement 3. L'Opérateur décharge le colis de l'étagère gigogne en 113 et en 114 la navette avec l'étagère gigogne revient à la zone parking 13.

En 115, il s'agit d'un petit colis. Une navette arrive dans la zone de rangement avec un chariot élévateur, Le plateau 50' est saisi par la fourche du chariot élévateur (ajustée en hauteur) avec le petit colis dans le rack 124. La navette amène l'ensemble au point de chargement 3. L'Opérateur décharge le petit colis en 117 et la navette repart avec le chariot élévateur et le plateau à la zone de parking 13. Si en 119, il n'y a plus de colis à charger en camion, le processus s'arrête. Sinon il revient à l'étape 110.

Avec cet agencement, à chaque insertion d'un plateau avec un colis dans un rack, l'unité 7 est apte à ajuster dynamiquement la hauteur d'insertion du plateau pour laisser le moins de place possible entre ce plateau et le plateau adjacent en dessous dans le rack. Les racks peuvent être disposés en rangées, c'est à dire par exemple un par segment. On peut avoir plusieurs allées de racks et aussi des segments sans racks à plateaux selon les particularités du tri de colis à réaliser. Mais on comprendra qu'avec cet agencement, on obtient une grande densité de stockage vertical des colis. Les racks peuvent être roulants, c'est à dire comporter des roulettes comme les étagères gigognes ou les chariots élévateurs. Les racks peuvent être prévus pour être accostés et déplacés par les robots navettes ce qui fait que toute la mise en place de la zone de rangement 11 du centre logistique peut être réalisée par les robots navettes. On peut avoir une reconfiguration automatique de cette zone de rangement.

Il va de soi que la présente invention ne saurait être limitée à la description qui précède d'un de ses modes de réalisation, susceptible de subir quelques modifications sans pour autant sortir du cadre de l'invention.

## Revendications

1. Procédé de traitement d'objets (2) dans un centre logistique (1) comprenant une zone de dépose (3) des objets arrivant dans le centre et une zone de rangement (11) des objets où les objets arrivant dans le centre sont stockés de manière ordonnée les uns par rapport aux autres en vue de ressortir du centre en ordre suivant une certaine séquence, procédé dans lequel on déplace les objets de la zone de dépose vers la zone de rangement avec des étagères gigognes (5) attelées à des robots-navette (6), **caractérisé en ce qu'**on utilise aussi des plateaux (50') posés sur des chariots élévateurs (5') attelés aux robots-navette pour déplacer les objets de la zone de dépose vers la zone de rangement, et au moins un rack vertical (12') à plateaux pour stocker en superposition les plateaux chargés en objets dans la zone de rangement, **en ce que** si un objet est chargé sur une étagère gigogne dans la zone de dépose, le robot-navette stocke l'objet avec l'étagère gigogne dans une partie basse du rack à plateaux et si un objet est chargé sur un plateau posé sur un chariot élévateur, le robot-navette stocke l'objet avec le plateau au-dessus de l'étagère gigogne dans une partie haute du rack à plateaux qui est munie de glissières horizontales.

2. Procédé selon la revendication 1, **caractérisé en ce que** les chariots élévateurs sont actionnés par les robots-navette de telle manière à positionner dynamiquement en hauteur les plateaux dans le rack à plateaux pour minimiser l'espace libre entre deux plateaux consécutifs.

3. Procédé selon la revendication 1 ou 2, **caractérisé en ce qu'**on utilise plusieurs racks à plateaux disposés en une ou plusieurs rangées dans la zone de rangement.

4. Procédé selon l'une des revendications précédentes, **caractérisé en ce que** les objets sont des colis.

5. Centre logistique (1) de traitement de colis (2) comprenant au moins un point (3) de dépose/chargement desdits colis (2) et une zone de rangement (11) destinée à recevoir des colis (2) en attente de chargement et divisée en différents segments (12) correspondants chacun à une expédition desdits colis (2), et des étagères (5) sur pied de type gigogne de formats (hauteurs et largeurs) différents, aptes à s'encastrer en se superposant, et des navettes (6) motorisées autonomes aptes à accoster chaque étagère (5) sous la commande d'une unité centrale (7) de contrôle/commande, **caractérisé en ce qu'**il comprend en outre des chariots élévateurs (5') portes plateaux (50') aptes à être accostés par les navettes et un ou plusieurs racks à plateaux (12') dans lesquels sont stockés en partie basse des étagères gigogne chargées en colis et en partie haute, au-dessus des étagères gigognes, des plateaux chargés en colis.

6. Centre logistique selon la revendication 5, **caractérisé en ce que** le ou les racks (12') à plateaux sont roulants.

7. Centre logistique selon la revendication 6, **caractérisé en ce que** le ou les racks (12') à plateaux roulants sont agencés pour être accostés et déplacés par une navette.

## Patentansprüche

1. Verfahren zur Behandlung von Gegenständen (2) in einem Logistikzentrum (1), umfassend eine Absetzzone (3) für die im Zentrum eintreffenden Gegenstände und eine Aufbewahrungszone (11) für die Gegenstände, in der die im Zentrum eintreffenden Gegenstände in Bezug aufeinander geordnet gelagert werden, um das Zentrum in einer bestimmten Reihenfolge geordnet wieder zu verlassen, wobei bei dem Verfahren die Gegenstände mit ausziehbaren Regalen (5), die an Roboter-Shuttles (6) angekuppelt werden, aus der Absetzzone in die Aufbewahrungszone verfahren werden, **dadurch gekennzeichnet, dass** auch Platten (50') verwendet werden, die auf Hubwagen (5') gesetzt werden, die an die Roboter-Shuttles angekuppelt werden, um die Gegenstände aus der Absetzzone in die Aufbewahrungszone zu verfahren, und mindestens ein vertikales Plattengestell (12') zum Lagern der mit Gegenständen beladenen Platten übereinander in der Aufbewahrungszone, dass, wenn ein Gegenstand in der Absetzzone auf ein ausziehbares Regal geladen wird, das Roboter-Shuttle den Gegenstand mit dem ausziehbaren Regal in einem unteren Teil des Plattengestells lagert, und wenn ein Gegenstand auf eine Platte geladen wird, die auf einen Hubwagen gesetzt wird, das Roboter-Shuttle den Gegenstand mit der Platte über dem ausziehbaren Regal in einem oberen Teil des Plattengestells lagert, der mit horizontalen Führungsschienen versehen ist.

2. Verfahren nach Anspruch 1, **dadurch gekennzeichnet, dass** die Hubwagen von den Roboter-Shuttles derart betätigt werden, dass sie die Platten in der Höhe dynamisch in dem Plattengestell positionieren, um den freien Raum zwischen zwei aufeinander folgenden Platten zu minimieren.

3. Verfahren nach Anspruch 1 oder 2, **dadurch gekennzeichnet, dass** mehrere Plattengestelle verwendet werden, die in der Aufbewahrungszone in einer oder mehreren Reihen angeordnet sind.

4. Verfahren nach einem der vorangehenden Ansprüche, **dadurch gekennzeichnet, dass** die Gegenstände Pakete sind.

5. Logistikzentrum (1) zur Behandlung von Paketen (2), umfassend mindestens einen Absetz-/Verladepunkt (3) für die Pakete (2) und eine Aufbewahrungszone (11), die dazu bestimmt ist, auf das Verladen wartende Pakete (2) aufzunehmen, und in verschiedene Segmente (12) unterteilt ist, die jeweils einem Versand der Pakete (2) entsprechen, und Regale (5) auf Füßen vom ausziehbaren Typ mit unterschiedlichen Formaten (Höhen und Breiten), die geeignet sind, übereinander verschachtelt zu werden, und motorisierte autonome Shuttles (6), die geeignet sind, unter der Steuerung einer zentralen Kontroll-/Steuerungseinheit (7) jedes Regal (5) anzufahren, **dadurch gekennzeichnet, dass** es ferner Platten (50') tragende Hubwagen (5') umfasst, die geeignet sind, von den Shuttles angefahren zu werden, und ein oder mehrere Plattengestelle (12'), in denen mit Paketen beladene ausziehbare Regale im unteren Teil der Regale und mit Paketen beladene Platten im oberen Teil über den ausziehbaren Regalen gelagert werden.

6. Logistikzentrum nach Anspruch 5, **dadurch gekennzeichnet, dass** das oder die Plattengestelle (12') fahrbar sind.

7. Logistikzentrum nach Anspruch 6, **dadurch gekennzeichnet, dass** das oder die fahrbaren Plattengestelle (12') dazu eingerichtet sind, von einem Shuttle angefahren und verfahren zu werden.

## Claims

1. A method of handling articles (2) in a logistics center (1) having an unloading zone (3) for unloading the articles arriving at the center and an article storage zone (11) where the articles arriving at the center are stored in mutually ordered manner with a view to them leaving the center in order following a certain sequence, which method consists in moving the articles from the unloading zone to the storage zone with nesting racks (5) coupled to shuttle robot carts (6), said method being **characterized in that** it also uses trays (50') placed on lift trolleys (5') coupled to the shuttle robot carts for moving the articles from the unloading zone to the storage zone, and at least one vertical tray rack (12') for storing the trays loaded with the articles in superposed manner in the storage zone, **in that** if an article is loaded on a nesting rack in the unloading zone, the shuttle robot cart stores the article with the nesting rack in a lower portion of the tray rack, and if an article is loaded on a tray placed on a lift trolley, the shuttle robot cart stores the article with the tray above the nesting rack in an upper portion of the tray rack that is provided with horizontal runners.

2. A method according to claim 1, **characterized in that** the lift trolleys are actuated by shuttle robot carts in such a manner as to position the trays dynamically and heightwise in the tray rack so as to minimize the empty space between two consecutive trays.

3. A method according to claim 1 or claim 2, **characterized in that** a plurality of tray racks are used that are disposed in one or more rows in the storage zone.

4. A method according to any preceding claim, **characterized in that** the articles are parcels.

5. A logistics center (1) for handling parcels (2), which logistics center comprises a loading/unloading point (3) for loading/unloading the parcels (2) and a storage zone (11) that is designed for receiving parcels (2) waiting for loading, and that is subdivided into various segments (12), each of which corresponds to a shipment of said parcels (2), and racks (5) on legs of the nesting type and of different formats (heights and widths) suitable for nesting by being superposed on one another, and independently self-propelled motor-driven shuttle carts (6) suitable for docking with each rack (5) under the control of a central processing unit (7), said logistics center being **characterized in that** it further comprises lift trolleys (5') for carrying trays (50') and suitable for being docked with the shuttle carts, and one or more tray racks (12') in which nesting racks loaded with parcels are stored in the lower portion and trays loaded with parcels are stored in the upper portion, above the nesting racks.

6. A logistics center according to claim 5, **characterized in that** the tray rack(s) (12') are wheeled.

7. A logistics center according to claim 6, **characterized in that** the wheeled tray rack(s) (12') are arranged to be docked with and moved by a shuttle cart.
